# FASCICULE DE BREVET EUROPEEN

(11) **EP 4 323 471 B1**
(45) Date de publication et mention de la délivrance du brevet: **12.03.2025**
(21) Numéro de dépôt: 22718750.7
(22) Date de dépôt: 01.04.2022
(51) Int. Cl.: C10B 49/14, C10B 53/07, C10G 9/34, C10B 7/10, A62D 3/32, C01F 11/24, C10B 53/00

(54) **PROCEDE DE GAZEIFICATION D'UNE MATIERE CARBONEE PAR CATALYSE EN SELS FONDUS - INSTALLATION ASSOCIEE**
VERFAHREN ZUR VERGASUNG EINER KOHLENSTOFFHALTIGEN SUBSTANZ DURCH SCHMELZSALZKATALYSE UND ZUGEHÖRIGE ANLAGE
PROCESS FOR GASIFYING A CARBON-CONTAINING SUBSTANCE BY MOLTEN SALT CATALYSIS, AND ASSOCIATED PLANT

(30) Priorité: 16.04.2021 FR 2103945
(43) Date de publication de la demande: 21.02.2024
(73) Titulaire: Crymirotech, 62217 Agny (FR)
(72) Inventeur: LEPINAY, Maxime, 62217 Agny (FR)
(74) Mandataire: RVDB
(86) Numéro de dépôt international: PCT/FR2022/050620
(87) Numéro de publication internationale: WO 2022/219260

(56) Documents cités:
- EP-A2- 0 070 789
- WO-A2-2014/167139
- CN-A- 105 385 468
- FR-A1- 2 156 050
- GB-A- 2 106 932
- ZHANG JING ET AL: "Coordination and Thermophysical Properties of Transition Metal Chlorocomplexes in LiCl-KCl Eutectic", vol. 125, no. 31, 12 August 2021 (2021-08-12), US, pages 8876 - 8887, XP055869702, ISSN: 1520-6106, Retrieved from the Internet <URL:https://pubs.acs.org/doi/pdf/10.1021/acs.jpcb.1c03748> [retrieved on 20211206], DOI: 10.1021/acs.jpcb.1c03748

## Description

### Domaine technique

La présente invention concerne la transformation d'une matière carbonée en gaz, en particulier en hydrocarbures volatils. Le procédé peut avantageusement être appliqué à des déchets d'origine et de composition variées.

### Etat de la technique

Les déchets notamment les matières plastiques, en particulier les matière plastiques thermodurcissables et/ou contenant des halogènes sont difficilement recyclables. Ils sont pour la plupart enfouis.

Des procédés de recyclage des déchets plastiques ont néanmoins été proposés. Certains mettent en œuvre des sels inorganiques fondus.

Ainsi, le document CN 105385468 A décrit un procédé de recyclage des matières plastiques utilisant des sels fondus. Pour augmenter la surface de contact entre les matières plastiques à traiter, des sels fondus sont pulvérisés sur des particules de plastique de moins de 30mm. Les sels fondus utilisés sont un mélange de carbonate de sodium, de carbonate de potassium et autres carbonates ayant une température de fusion basse mais supérieure à 50°C.

Le document CN 102389888 A décrit un procédé de recyclage des plaques de circuits imprimés. Les plaques sont broyées puis plongées dans un bain de sels fondus composé de carbonate de sodium et/ou de carbonate de potassium. L'air est utilisé comme agent de gazéification. La température du bain de 900°C à 1000°C.

La publication intitulée « Review of thermal processing of biomass and waste in molten salts for production of renewable fuels and chemicals » publiée dans la revue International Journal of low-carbon technologies en 2012 (volume 7, pages 318 à 324) fait un état de l'art de la pyrolyse et de la gazéification de la biomasse au moyen d'un bain de sels fondus. Les halogénures sont connus pour avoir une action catalytique sur le craquage de certains composés. Les carbonates de métaux alcalins sont connus pour catalyser la gazéification du carbone en présence de vapeur et de dioxyde de carbone. Cette publication indique également que la pyrolyse du bois à 600°C-900°C a été réalisée avec un mélange de sel de carbonates et de chlorures (NaCl et KCl). La lignine peut être pyrolysée dans un mélange de ZnCl₂ et KCl à une température de l'ordre de 500°C-800°C.

S'agissant des déchets, la publication précitée indique que la pyrolyse de déchets ménagers est possible à 870°-1000°C dans du Na₂CO₃ fondu. Du polyéthylène, polystyrène et du PVC ont été pyrolysés à une température comprise entre 640°C et 850°C dans un mélange fondu de MgCl₂ et KCl. Les principaux produits obtenus sont le méthane et l'éthylène. Un mélange eutectique à une température de 420°C-480°C de NaOH et Na₂CO₃ permet également de pyrolyser le PVC, le polystyrène, le polypropylène et le polyéthylène. Des déchets plastiques contenant du caoutchouc ont pu être pyrolysés et transformés en gaz grâce à un mélange liquide de NaCl/AlCl₃ à 380°C-570°C.

Cette même publication indique que des vieux papiers ont pu être gazéifiés en présence de vapeur et de dioxyde de carbone dans un bain de carbonates fondus à une température comprise entre 700 et 750°C. Dans le cas de papier de type mouchoirs en papier, des mélanges de Li₂CO₃, Na₂CO₃ ont été utilisés. Le carbonate de lithium Li₂CO₃ permet d'obtenir davantage de CO₂. Les métaux alcalins dont les atomes sont petits ont un pouvoir catalytique supérieur aux autres du fait de leur diffusion aisée dans les déchets. Le calcium tend néanmoins à limiter le contact entre le papier et le CO₂, diminuant ainsi le rendement de la réaction.

D'autres travaux ont montré la gazéification des déchets de papier en présence de CO₂ et d'un bain de carbonates fondus à une température comprise entre 650°C et 750°C. La présence de Na₂CO₃ fondu permet de catalyser l'attaque du CO₂ sur le papier. L'ajout de K₂CO₃ et LiCO₃ augmente le rendement.

Cette publication indique également que des boues de station d'épuration et du riz ont pu être gazéifiés par un bain de Li₂CO₃ et K₂CO₃ en présence de dioxyde de carbone et à une température comprise entre 500°C et 750°C. Des composés de types SOₓ ont néanmoins été retrouvés dans la phase gazeuse générée.

Le document EP 0 070 789 A2 décrit un procédé de destruction de matières organiques contenant du soufre et/ou des halogènes et/ou des métaux toxiques. Le bain utilisé contient des oxydes alcalins et alcalino-terreux et/ou des sulfates alcalins. Ce procédé est appliqué à la gazéification des pneus.

Le document FR 2 156 050 A1 décrit un procédé de craquage d'une matière hydrocarbonée (hydrocarbures) dans un bain de sels fondus. Le bain contient soit un mélange d'oxyde de lithium, d'oxyde de potassium et d'oxyde de bore, soit un mélange de pentaoxyde de phosphore et d'oxyde de sodium. On obtient ainsi des hydrocarbures gazeux en C₃. La gazéification s'effectue avec un courant d'air à pression atmosphérique.

Le document GB 2 106 932 A1 fait état d'un procédé de traitement d'une matière hydrocarbonée solide ou liquide telle que le charbon, la lignite, les liquides dérivés du charbon, le bitume, le bois ou autre biomasse ou de l'huile de schiste au moyen d'un bain de sels fondus. Le bain peut contenir les sels suivants : KCl, LiCl, NaCl, CaCl₂ ou des mélanges de carbonates.

Le document WO 2014/167139 A2 décrit un procédé de recyclage de matières plastiques au moyen d'un liquide de pyrolyse, lequel peut être un bain de métaux non ferreux fondus contenant au moins du zinc, de l'étain de l'aluminium, du plomb, du cuivre ou leurs alliages.

### Problème technique à résoudre

Un but de la présente invention est de proposer un procédé de gazéification qui permet de réduire voire de supprimer la formation de composés oxygénés volatils. En effet, ces composés ne peuvent être valorisés et sont considérés comme des sous-produits indésirables.

Un autre but de la présente invention est de proposer un procédé de gazéification d'une matière carbonée qui soit simple à mettre en œuvre, et en particulier qui puisse être mis en œuvre dans l'air.

Un autre but de la présente invention est de proposer un procédé tel que précité qui ne consomme pas trop d'énergie pour obtenir la fusion du ou des sels.

Un autre but de la présente invention est de proposer un procédé de gazéification qui permet d'obtenir majoritairement des hydrocarbures volatils, en particulier, du pentane, du propène, de l'éthane et de l'éthylène.

Un autre but de la présente invention est de proposer un procédé qui permet d'obtenir une faible proportion (moins de 8% en masse) d'hydrocarbures comportant 7, 8, 9 ou plus d'atomes de carbone.

Un autre but de la présente invention est de proposer un procédé qui permet d'obtenir au moins 30% en masse d'hydrocarbures insaturés linéaires comprenant entre 2 et 4 atomes de carbone (éthylène, propylène et butènes).

Un autre but de la présente invention est de proposer un procédé de gazéification qui peut être mis en œuvre avec une grande variété de matière carbonée, laquelle peut être synthétique (matières plastiques notamment polymères thermodurcissables, par exemple) ou d'origine organique (bois, carton, déchets végétaux) ou d'être d'origine mixte (déchets ménagers mouillés et comportant des résidus de matière organique (emballage de nourriture)).

Un autre but de la présente invention est de proposer un procédé qui ne nécessite pas forcément de broyage de la matière carbonée et qui permet l'obtention d'hydrocarbures volatils même lors que la matière solide se présente sous la forme de morceaux de tailles différentes et notamment des morceaux de plusieurs centimètres voire dizaine de centimètres.

Un autre but de la présente invention est de proposer un procédé qui s'avère efficace même lorsque la matière carbonée est enfermée dans des sacs en matière plastique (matière carbonée hétérogène, comme par exemple, des ordures ménagères comprenant des végétaux et des matières plastiques).

### Résumé de l'invention

La présente invention concerne un procédé de gazéification d'une matière carbonée solide par catalyse en sels fondus selon lequel :
- on met en contact pendant une durée déterminée ladite matière carbonée avec un premier bain de sels fondus qui comprend au moins un sel de type chlorure choisi parmi NaCl, MgCl₂, CaCl₂, KCl, FeCl₂ et présente une température de fusion supérieure ou égale à 300°C, une densité supérieure à 1 mesurée à l'état liquide et à pression atmosphérique et une capacité thermique massique mesurée à l'état liquide et à pression atmosphérique toujours inférieure à la capacité thermique massique de l'eau mesurée à une température de 25°C et à pression atmosphérique (c'est-à-dire inférieure à 4,18 kJ/kg.K), ledit contact est réalisé en présence d'air ;
- on récupère les gaz formés.

De manière caractéristique, selon l'invention, lesdits gaz récupérés sont mis en contact avec un second bain de sels fondus éventuellement différent dudit premier bain et, en sortie dudit second bain, les gaz sont soit stockés éventuellement sous pression, soit réinjectés dans ledit premier bain ou ledit second bain.

Le passage dans le second bain permet de transformer les composés oxygénés volatils en alcanes, alcènes ou alcynes, lesquels ne comportent plus d'oxygène et sont valorisables. Si un passage dans le deuxième bain ne suffit pas, il est possible de faire passer le mélange gazeux récupéré en sortie du deuxième bain dans le premier bain ou à nouveau dans le deuxième bain. Le second bain peut également être le premier bain, dans ce cas, il y a deux passages dans la même enceinte contenant le premier bain.

Les composés gazeux contenant de l'oxygène peuvent être formés en quantité non négligeable en fonction de la nature de la matière carbonée traitée. Ainsi, si la matière carbonée contient de la lignine ou de la cellulose, les composés oxygénés sont plus nombreux que dans le cas de déchets plastiques.

Le second bain permet de dégrader en hydrocarbures les composés organiques formés (du type éthanal, par exemple) par réaction avec l'oxygène contenu dans l'air au-dessus du premier bain. Avantageusement, on met en contact lesdits gaz avec ledit second bain en faisant buller les gaz dans ledit second bain. Néanmoins, la mise en contact n'est pas limitée au bullage.

Avantageusement, que lesdits gaz sont introduits sous le niveau de surface libre du second bain et de manière à ce qu'ils traversent la plus grande hauteur du bain. On peut ainsi les injecter depuis le fond de la cuve contenant le second bain.

La densité du premier bain permet une bonne catalyse de la réaction, la matière carbonée se trouvant en majorité dans le bain (entre deux eaux) ou en flottant sur le bain.

De préférence, dans toute la présente demande de brevet, la densité et la capacité thermique massique sont mesurées à la température de fusion du bain.

La réaction pouvant se faire en présence d'air, le procédé est simple à mettre en œuvre et ne nécessite pas la présence de vapeur ou de dioxyde de carbone comme les procédés de l'art antérieur. L'installation est également plus simple à réaliser.

Le bain a de préférence une densité inférieure à 2,2 laquelle représente la densité maximale des matières plastiques. Ainsi les déchets inertes (gravats, brique, bétons, cailloux et autres) vont couler dans le bain et pourront être facilement retirées.

La température de fusion du premier bain est de préférence inférieure ou égale à 650°C. Cette température permet d'obtenir la fusion sans trop de dépense énergétique.

Le fait que la capacité thermique massique du premier bain soit inférieure à celle de l'eau permet d'obtenir rapidement la fusion des sels et d'obtenir également un refroidissement assez rapide ce qui est avantageux lorsque le procédé est mis en œuvre de manière discontinue (batch). Le chlorure majoritaire est de préférence le chlorure de sodium. Le premier bain peut également contenir, en tant que chlorure, uniquement du chlorure de calcium. Il peut également être constitué de chlorure de sodium.

La composition du premier bain n'est pas limitée selon l'invention. Il peut contenir en outre, au moins un hydroxyde choisi parmi LiOH, NaOH, KOH, Ca(OH)₂, Fe(OH)₂ et/ou au moins un oxyde choisi parmi K₂O, Na₂O, CaO, P₂O₅ et/ou au moins un carbonate choisi parmi Li₂CO₃, Na₂CO₃, K₂CO₃, CaCO₃ et/ou au moins un composé nitreux choisi parmi NaNO₂ et NaNO₃.

Avantageusement, lorsque le premier bain contient au moins un carbonate, la teneur massique en carbonate(s) du premier bain est inférieure à 10%. Cette proportion permet de limiter la température de fusion du premier bain tout en ayant une bonne activité catalytique.

Avantageusement, ledit premier bain contient au moins un sel dont la température de fusion est inférieure à la température de fusion dudit chlorure ou à la température de fusion la plus basse desdits chlorures. Ce mélange de sels peut partiellement se déphaser en se solidifiant, permettant de limiter la corrosion de la cuve. La cuve contenant le bain est avantageusement en inox.

Selon un mode de réalisation avantageux dudit premier bain, il contient un sel de chlorure (de préférence le chlorure de sodium), un sel ayant une température de fusion inférieure à celle du chlorure et moins de 5% d'oxyde(s) et de carbonate(s). Un tel bain permet la mise en œuvre du procédé de l'invention. Le ou les carbonates sont choisis parmi les carbonates précités. Le ou les oxydes sont choisis parmi les oxydes précités.

La composition du second bain n'est pas limitée selon l'invention. Il peut présenter une température de fusion supérieure à 300°C et/ou il peut comprendre en outre au moins un chlorure différent du chlorure de sodium. Ce second bain permet d'affiner la transformation de la matière carbonée déjà gazéifiée par le premier bain. Les gaz vont buller dans le second bain assurant une réaction rapide. Le volume du second bain peut être inférieur au volume du premier bain. Même si sa température de fusion est plus élevée, son volume étant moindre, l'énergie dépensée pour obtenir la fusion reste raisonnable. Le second bain peut également être chauffé par une partie de la chaleur émise par le premier bain.

Selon un mode de réalisation combinable à chacun des modes de réalisation précités, ledit second bain contient au moins un iodure et/ou un fluorure. L'iodure peut être choisi notamment parmi LiI, NaI, KI, AlI₃, sans y être limité. Le fluorure peut être choisi indépendamment de l'iodure parmi les sels suivants : LiF, NaF, KF, CaF₂, MgF₂, Na₃AlF₆, sans y être limité

Ainsi, le second bain peut également contenir plus de 10% en masse d'au moins un carbonate. La pression au-dessus dudit premier bain peut être égale ou supérieure à la pression atmosphérique. Elle est avantageusement égale à la pression atmosphérique ; la température au-dessus du premier bain est par exemple d'au moins 100°C.

Avantageusement, le contact entre ledit premier bain et ladite matière carbonée est mis en œuvre dans une enceinte contenant de l'air et rendue hermétique après introduction de ladite matière carbonée dans ladite enceinte. Il est ainsi possible d'éviter d'avoir recours au second bain. L'oxygène est consommé en début de réaction et produit des composés organiques contenant des atomes d'oxygène. Ceux-ci sont en faible quantité car l'enceinte est fermée et la quantité d'oxygène réduite. Par ailleurs, ils peuvent également être transformés en hydrocarbures par recyclage (second passage) dans le premier bain.

La réaction peut également commencer dans l'air puis être poursuivie dans une atmosphère réduite en oxygène gazeux (moins de 20 % en volume, avantageusement). Il est ainsi possible de limiter la quantité de composés organiques contenant de l'oxygène formés.

La matière carbonée solide est avantageusement choisie parmi :
- les déchets solides contenant ou constitués de matière(s) plastique(s) choisie parmi l'ABS, les acétates de cellulose (CA), les polyamides, le poly(téréphtalate de butylène) (PBT), les polycarbonates, les polyéthylènes, le PET, le PEHD, le PP, le PVC, PTFE, PEBD, le PMMA, les poly formaldéhydes (POM), les PVAC, les copolymères styrène-acrylonitrile, le polystyrène éventuellement expansé , le PEEK, les résines thermo durcies, en particulier les silicones et les mélanges d'au moins deux de ces matières plastiques ;
- les déchets contenant ou constitués de matière organique animale et/ou végétale, éventuellement transformée, en particulier du papier, du carton, du bois, des déchets végétaux ; et - les mélanges de ces deux sortes de déchets ; et
- les déchets précités, éventuellement en mélange et contenus dans des sacs en matière plastique choisie parmi l'ABS, les acétates de cellulose (CA), les polyamides, le poly(téréphtalate de butylène) (PBT), les polycarbonates, les polyéthylènes, le PET, le PEHD, le PP, le PVC, PTFE, PEBD, le PMMA, les poly formaldéhydes (POM), les PVAC, les copolymères styrène-acrylonitrile, le polystyrène éventuellement expansé, le PEEK, les résines thermo durcies, en particulier les silicones et les mélanges d'au moins deux de ces matières plastiques

Il est ainsi possible de traiter des déchets ménagers contenant des matières plastiques et des matières organiques tout comme des déchets de construction, lesquels contiennent souvent des isolant thermiques en matière plastique. Il est même possible de traiter les mélanges de ces déchets.

La matière carbonée se présente avantageusement sous la forme de pièces de quelques millimètres d'épaisseur, comme par exemple, les sacs plastiques, les films ou les feuilles. La surface de ces pièces n'est pas limitée. La matière carbonée peut néanmoins se présenter sous la forme de pièces de plusieurs centimètres d'épaisseur ou de diamètre, dans la limite de la taille du premier bain. Elle peut évidemment être broyée au préalable mais ce n'est pas nécessaire.

Quel que soit le mode de mise en œuvre du procédé de l'invention, ledit contact avec ledit second bain est mis en œuvre dans une enceinte fermée contenant un mélange gazeux contenant 20% ou moins d'oxygène ledit mélange gazeux pouvant être à une pression inférieure à la pression atmosphérique.

Avantageusement, on réduit la pression du mélange gazeux situé au-dessus du second bain avant la mise en contact avec les gaz récupérés. La teneur en oxygène réduite au-dessus du bain diminue la formation de composés oxygénés.

Lorsque lesdits gaz issus du premier bain et récupérés contiennent de la vapeur d'eau, on condense ladite vapeur d'eau avant leur introduction dans ledit second bain.

En effet, si la matière carbonée contient de l'eau cette dernière va être vaporisée et va traverser le premier bain. Il est important de la condenser afin de ne pas l'introduire dans le second bain. L'eau présente absorbe de l'énergie pour se vaporiser au détriment de la réaction catalytique ; la présence d'eau augmente donc la consommation énergétique du procédé

La présente invention concerne également une installation permettant la mise en œuvre du procédé selon l'une quelconque des revendications précédentes.

Cette installation comprend :
- une enceinte contenant un premier mélange de sels éventuellement à l'état fondu, ledit premier mélange de sels comprenant au moins un sel de type chlorure choisi parmi NaCl, MgCl₂, CaCl₂, KCl, FeCl₂, présentant une température de fusion supérieure ou égale à 300°C, une densité supérieure à 1 mesurée à l'état liquide et à pression atmosphérique et une capacité thermique massique mesurée à l'état liquide et à pression atmosphérique inférieure à la capacité thermique massique de l'eau mesurée à une température de 25°C et à pression atmosphérique ;
- des moyens de chauffage dudit premier mélange de sels permettant la fusion de ce dernier ;
- au moins un convoyeur de matière carbonée, lequel comprend une entrée par laquelle ladite matière carbonée est introduite et une sortie disposée de manière à ce que ladite matière tombe dans ledit premier bain ;
- des moyens de récupération des gaz qui sont connectés à ladite enceinte et qui débouchent au-dessus du premier bain ; et
- un second réacteur qui comprend une entrée connectée auxdits moyens de récupération des gaz et qui est apte à contenir un second mélange de sels fondus ;
- des moyens de chauffage aptes à faire fondre ledit second mélange de sels ;
- des moyens de chauffage aptes à faire fondre ledit second mélange de sels,
ledit second réacteur comportant éventuellement au moins un tamis permettant de former des bulles de gaz de taille donnée et ledit second réacteur comportant une première conduite qui relie la sortie dudit second réacteur à un réservoir de stockage et éventuellement une seconde conduite qui relie la sortie dudit second réacteur avec une zone de ladite enceinte située sous la surface dudit premier bain de sels fondus ou à l'entrée dudit second réacteur.

Lorsque ledit second réacteur comporte une cuve contenant ledit second mélange de sels fondus, ladite entrée dudit second réacteur est disposée en dessous du niveau de la surface libre dudit second mélange de sels fondus, ce qui permet une mise en contact par bullage des gaz récupérés. L'enceinte et le seconde réacteur ont une dimension suffisante pour contenir un gaz ou un mélange gazeux dans un volume situé au-dessus du premier bain. C'est dans ce volume que les hydrocarbures gazeux générés vont s'accumuler.

Selon un mode de réalisation combinable à chacun des modes de réalisation précités, le second réacteur comprend des moyens permettant de le rendre étanche aux gaz et ladite installation comprend des moyens formant pompe permettant de réduire la pression du mélange gazeux contenu dans ledit second réacteur avant la mise au contact dudit second mélange de sels fondus avec les gaz récupérés. Ainsi, si le second réacteur comprend une cuve contenant le second bain, les moyens formant pompe permettent de réduire la pression du volume de gaz situé au-dessus de la surface libre du second bain avant la mise en contact des gaz récupérés avant le second bain.

Quel que soit le mode de réalisation, l'installation comporte avantageusement des moyens de condensation de la vapeur d'eau et lesdits moyens de condensation sont disposés en amont dudit réservoir de stockage et/ou sur ladite seconde conduite et amont de ladite première enceinte et/ou dudit second réacteur.

Avantageusement, l'enceinte et/ou le second réacteur compren(nen)t en outre des moyens d'isolation/fermeture de ladite enceinte par rapport au milieu extérieur. Ces moyens permettent d'éviter que les gaz produits ne s'évacuent vers le milieu extérieur et évitent également la formation d'une trop grande quantité de composés organiques oxygénés, produits du fait de la réaction avec l'oxygène de l'air. Des moyens formant pompe peuvent également équiper l'enceinte contenant le premier bain, ce qui permet en réduisant la pression au-dessus du premier bain (après introduction des déchets à traiter et isolation de l'enceinte) de réduire la quantité d'oxygène susceptible de réagir avec la matière carbonée.

Le second réacteur peut être une colonne d'échange liquide/gaz fonctionnant à co-courant ou contre-courant.

Selon un mode de réalisation, le second réacteur comprend une cuve contenant ledit second mélange de sels et ladite entrée dudit second réacteur est disposée en dessous du niveau de la surface libre dudit second mélange de sels, de préférence au niveau du fond de la cuve. L'enceinte peut comporter au niveau de son fond, une grille amovible permettant de retirer les matière inertes (gravas et autres).

L'installation de l'invention peut être au moins partialement enterrée. Ainsi, au moins le premier bain peut être enfoui dans le sol. Seules les entrées des convoyeurs sont accessibles pour permettre l'insertion de la matière carbonée dans le premier bain. Le second bain et/ou le réservoir de stockage peut également être enfoui.

Il est bien entendu que toutes les caractéristiques des bains de sels fondus citées en référence au procédé de l'invention peuvent s'appliquer aux mélanges de sels (fondus ou non) qui peuvent être utilisés dans l'installation de l'invention.

### Définitions

Les termes « hydrocarbures volatils » désignent les hydrocarbures saturés, insaturés (alcène, alcynes), cycliques, cycliques insaturés ayant une pression de vapeur de 0,01 kPa ou plus à une température de 293,15 K. Il peut s'agir plus particulièrement des hydrocarbures saturés ou non, éventuellement cycliques (saturés ou non également) et comportant de 1 à 5 atomes de carbone. Ils peuvent être ramifiés ou non et substitués par un ou des radicaux choisis parmi les groupements suivants : méthyl ou éthyle.

Les termes « matière carbonée » désigne toute matière contenant des atomes de carbone, des atomes d'hydrogène et éventuellement d'autres atomes, dont des atomes d'oxygène, de soufre ou des atomes d'halogène, par exemple. Au sens de l'invention, la matière organique est une matière carbonée.

Les termes « matière carbonée solide » désignent une matière à l'état divisée sans limitation de taille et pouvant contenir de l'eau ou des huiles, l'eau et les huiles étant minoritaires. Une dispersion ou une émulsion de matière carbonée dans un liquide (boue) n'est pas une matière carbonée solide au sens de l'invention.

### Figures

La présente invention, ses caractéristiques techniques et les divers avantages qu'elle procure apparaîtront mieux à la lecture de la description qui suit, d'un mode de réalisation particulier de l'invention, présenté à titre d'exemple non limitatif et qui fait référence aux dessins annexés sur lesquels :
La Fig. 1 représente une vue schématique d'un mode de réalisation particulier de l'invention ;
La Fig.2 représente un mode de réalisation particulier du bac et des convoyeurs ; et
La Fig. 3 représente trois variantes de réalisation du second bain de sel(s) fondu(s).

### Description détaillée

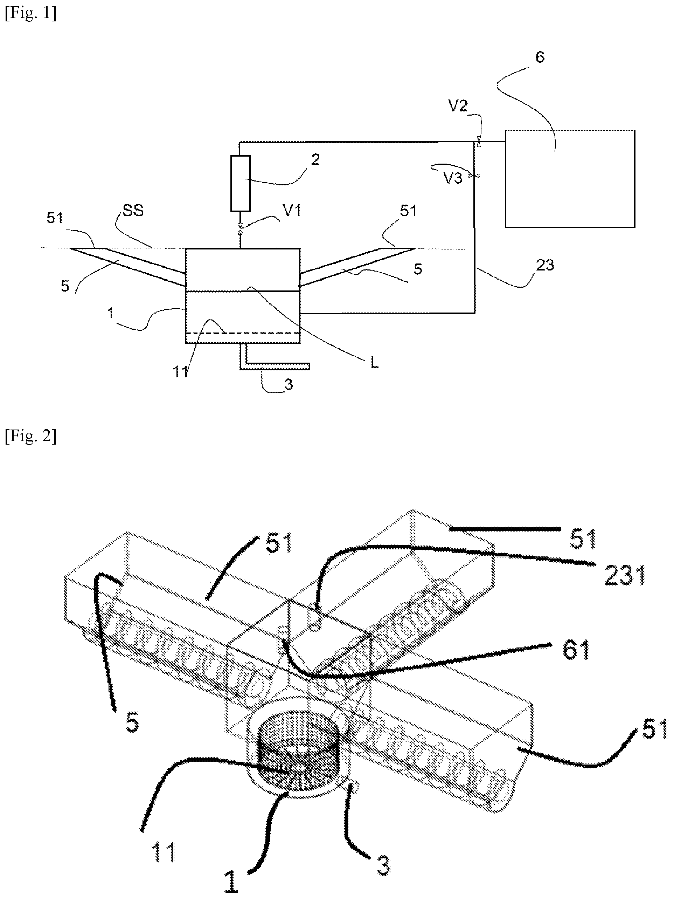

En référence à la Fig. 1, un mode particulier de réalisation de l'installation et de mise en œuvre du procédé de l'invention va être décrit. L'installation comporte une enceinte 1 qui contient le premier bain de sel(s) fondu(s). La surface du premier bain liquide est représentée par la ligne L. Des moyens de chauffage (non représentés) permettent de faire fondre les sels solides au départ et de former une phase liquide, laquelle constitue le bain de sels fondus. L'enceinte est munie d'une canalisation de vidange 3 qui débouche dans le fond de l'enceinte, sous le bain et permet de vider l'enceinte 1. L'enceinte comporte également un tamis amovible 11 qui permet de retenir les matériaux solides qui ne sont dégradés par le bain. Deux convoyeurs 5 débouchent au-dessus de la surface du bain et permettent de transporter les déchets déposés à leur entrée 51 dans le bain. L'enceinte 1 peut être hermétiquement fermée au niveau de la sortie des convoyeurs 5 au moyen par exemple de trappes ou autre. L'installation comporte également une colonne 2 contenant un second bain de sel(s) fondu(s). Une vanne V1 permet de réguler le flux de gaz émanant de l'enceinte 1 et entrant dans la colonne 2. La sortie de la colonne 2 est reliée à un réservoir de stockage 6 permettant de mettre les gaz sous pression. Une vanne V2 permet de réguler le débit de gaz entrant dans le réservoir de stockage 6. En amont de la vanne V2 se trouve une conduite de dérivation 23 qui permet de faire communiquer la sortie de la colonne 2 avec l'enceinte 1. La conduite de dérivation 23 débouche dans l'enceinte 1, à un niveau situé sous la surface L du premier bain de sel(s) fondu(s). Une vanne V3 équipe la dérivation 23 et permet de réguler le débit de gaz recyclés vers le premier bain. La ligne en pointillés SS représente la surface du sol. Sur la Fig. 1, l'enceinte 1 est enterrée et l'entrée 51 des convoyeurs affleure au niveau du sol. Il est également possible d'enterrer également la colonne 2.

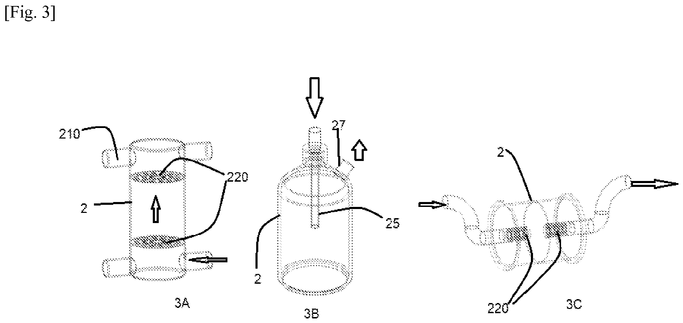

Un mode de mise en œuvre du procédé de l'invention va maintenant être décrit en référence à la Fig. 1. Les matières carbonées à traiter sont amenées, par exemple, par camion vers l'installation. Il peut s'agir de déchets solides. Les déchets sous forme de suspension de particules solides dans un liquide (boue) ne peuvent pas être traitées par le procédé de l'invention. Les déchets sont introduits dans les convoyeurs 5 au niveau de leur entrée 51. Les convoyeurs 5 amènent les déchets dans l'enceinte et font tomber ces derniers dans le premier bain de sel(s) fondu(s). Le bain a été formé au préalable par fusion des sels grâce au moyen de chauffage (non représentés). En fonction de leur densité, les déchets s'enfoncent dans le bain ou flottent à la surface de ce dernier. Les déchets inertes (gravats, briques, béton, cailloux et autres) qui ont une densité plus importante que les déchets carbonés, en particulier que les plastiques tombent au fond du bain et s'accumulent sur le tamis 11. Elles seront ensuite retirées à la fin du procédé. Après l'introduction des déchets, on ferme hermétiquement les entrées 51 au moyen par exemple de trappes ou autre et les sels sont fondus (fonctionnement en batch). L'enceinte 1 contient de l'air situé au-dessus de la surface du premier bain. La réaction de craquage de la matière carbonée en hydrocarbures est catalysée par les ions du premier bain. Cette réaction consomme l'oxygène de l'air contenu dans l'enceinte 1, au-dessus de la surface L du premier bain. L'enceinte 1 étant hermétique, la réaction débute bien sous une atmosphère d'air. Elle se poursuit ensuite sous une atmosphère plus pauvre en oxygène voire ne contenant plus d'oxygène. L'absence d'oxygène augmente le rendement en hydrocarbures notamment en hydrocarbures volatils, quel que soit le type de matière carbonée traitée. La pression au-dessus du premier bain augmente du fait de la formation d'hydrocarbures. Quand elle atteint une valeur donnée qui indique que l'enceinte contient en majorité des hydrocarbures (volatils ou non), on ouvre la vanne V1. Les gaz pénètrent dans la colonne 2 contenant le second bain de sel(s) fondu(s). Ils subissent alors une seconde dégradation catalytique dans le ce second bain. Le second bain permet d'augmenter le rendement en hydrocarbures volatils. Le second bain peut être mise en œuvre dans une colonne 2 dans laquelle on fait buller les gaz à traiter. La colonne 2 et ses diverses variantes de réalisation seront décrites plus en détails en référence à la Fig. 3. Dans la colonne 2, les gaz subissent une seconde dégradation. En sortie de la colonne 2, en fonction de la composition du flux de gaz sortant, ce flux est soit dirigé (partiellement ou totalement) vers le réservoir de stockage 6. Tout ou partie du flux peut être redirigé vers le premier bain situé dans l'enceinte 1 pour un nouveau traitement. Les gaz sont injectés dans le bain afin de le traverser sous forme de bulles et d'y être une nouvelle fois dégradés.

Un mode de réalisation du procédé de l'invention va maintenant être décrit en référence à la Fig. 1, dans le cas de déchets contenant des matières plastiques, éventuellement mouillées ou partiellement recouverte de matière organique (type emballage alimentaire). Les déchets sont introduits, par exemple, par des bennes à ordures dans les convoyeurs 5. Après l'introduction des déchets, on ferme hermétiquement les entrées 51 au moyen par exemple de trappes ou autre et les sels sont fondus. Les déchets sont enfermés dans des sacs en matière plastique. Les sacs tombent dans le premier bain de sels fondus. Les sacs s'enfoncent immédiatement dans le bain du fait de la densité de ce dernier. L'enceinte 1 communique avec l'extérieur au niveau des convoyeurs 5. La réaction catalytique est immédiate et divers gaz sont produits au-dessus du bain. L'enceinte ne communique pas avec l'extérieur. L'enceinte dispose éventuellement d'un couvercle à bride lequel est relié à la colonne 2 ou au réservoir 6. Du fait de la présence d'oxygène dans l'air des composés de type éthanal sont également produits en même temps que les hydrocarbures volatils. La température au-dessus du bain est au minimum de 100 °C quand la température du bain est de 500 °C et la pression est de 1 bar. Une fois que la pression atteint une valeur donnée au-dessus du premier bain de sels fondus, on fait passer les gaz produits dans le second bain de sels fondus. Ce second bain permet de transformer les composés contenant de l'oxygène en hydrocarbures volatils. Des moyens d'analyse montées en sortie de la colonne 2 permettent d'indiquer la concentration en hydrocarbures volatils du mélange gazeux en sortie de la colonne 2. Si la composition est considérée comme satisfaisante, c'est-à-dire contenant plus de 90% en volume d'hydrocarbures volatils, le flux gazeux est orienté vers le réservoir de stockage. Dans le cas contraire, le flux gazeux est orienté vers le premier bain de sels fondus ou vers le second bain de sels fondus en fonction de sa composition et des composés qu'il est souhaitable de dégrader en hydrocarbures volatils (voir tableau 2).

En référence à la Fig. 2, un mode de réalisation particulier de l'enceinte 1 et des convoyeurs 5 va maintenant être décrit. Les éléments en commun avec ceux de la Fig. 1 sont référencés à l'identique. Sur la Fig. 2, l'enceinte 1 comporte dans sa partie basse un bac cylindrique 11 qui contient le premier bain (le liquide n'est pas représenté). La partie supérieure de l'enceinte est parallélépipédique et ouverte sur l'extérieur par l'intermédiaire des convoyeurs 5. Trois faces de cette partie sont connectées à un convoyeur 5. Les trappes ne sont pas représentées. La réaction de catalyse s'effectue toujours après l'introduction des déchets, la fermeture hermétique des entrées 51 et la fonte des sels. La sortie 61 est reliée au réservoir de stockage 6. La sortie 231 permet la recirculation des gaz formés vers le premier bain. L'installation entière ne comporte pas nécessairement un second bain.

En référence à la Fig. 3, trois variantes de réalisation du second bain vont maintenant être décrits. Il est à noter que le second bain est optionnel.

En référence à la Fig. 3, la colonne 2 comprend deux tamis 220 disposés l'un au-dessus de l'autre selon la hauteur de la colonne. Ces tamis permettent de diviser le flux de gaz à traiter en bulle de taille donnée. Les flèches noires indiquent la circulation des gaz, du bas vers le haut. Les sels fondus et donc liquides circulent de haut en bas de l'entrée 210 à la sortie 211. Le gaz et les sels circulent à contre-courant. Les bulles favorisent et accélèrent la réaction catalytique en augmentant la surface de contact entre les gaz et les sels.

Sur la Fig. 3, le second réacteur contient le second bain. Le réacteur n'étant pas plein, de l'air peut subsister au-dessus du second bain à moins de remplir l'espace non occupé par le sel fondu par une atmosphère inerte. Les gaz sont envoyés vers le centre du réacteur par la conduite d'entrée 25 de manière à buller dans le second bain de sels fondus. La conduite d'entrée 25 plonge dans le bain et débouche au centre du réacteur. Après réaction à l'intérieur du second bain, les gaz transformés sortent en haut du réacteur au niveau de la sortie 27.

En référence à la Fig. 3, une troisième variante va maintenant être décrite. Le second réacteur 2 est horizontal et contient le second bain. De préférence, le second bain remplit à moitié le second réacteur 2. Les conduites d'entrée et de sortie comportent des tamis 220 qui permettent la formation de bulles en entrée et en sortie du réacteur. Le second bain de sels est statique comme dans la seconde variante.

### Exemple 1

Les différents déchets indiqués ci-dessous dans le tableau 1 ont été traités selon le procédé de l'invention.

**Tableau 1**

| Type de déchets traités | Nom de l'échantillon de gaz | Récipient de l'échantillon de gaz | Méthode d'analyse de l'échantillon |
|---|---|---|---|
| PEHD | Alpha 1 | Sac multicouche 2L | µGC/MS |
| PEHD et PP | Alpha 2 | Sac multicouche 2L | µGC/MS |
| PEHD, PP et PET | Alpha 3 | Sac Tedlar^{®} 2L | µGC/MS |

Le Tedlar^{®} est un poly (fluorure de vinyle) thermoplastique semi-cristallin.

Le tableau 2 liste les COV non méthaniques produits par le procédé de l'invention lors du traitement des matières plastiques du tableau 1 en présence d'air et dans un réacteur fermé contenant uniquement le premier bain de sels fondus à 500 °C (+/- 20°C).

**Tableau 2**

| Liste des hydrocarbures | Alpha 1 | | Alpha 2 | | Alpha 3 | |
|---|---|---|---|---|---|---|
| | mg/(n)m³ | % en masse | mg/(n)m³ | % en masse | mg/(n)m³ | % en masse |
| Pentane | 206 | 1,57 | 31020 | 24,43 | 96981 | 35,18 |
| Propène | 1798 | 13,69 | 52886 | 41,65 | 96001 | 34,82 |
| Ethane | 318 | 2,42 | 9227 | 7,27 | 15991 | 5,80 |
| Ethylène | 1427 | 10,87 | 10450 | 8,23 | 12418 | 4,50 |
| Acétaldéhyde | 1283 | 9,77 | 429 | 0,34 | 7454 | 2,70 |
| 2-Méthylpentène | 591 | 4,50 | 2526 | 1,99 | 5375 | 1,95 |
| Hexene | 587 | 4,47 | 2526 | 1,99 | 5375 | 1,95 |
| 2-Butenal | 66 | 0,50 | 544 | 0,43 | 4242 | 1,54 |
| 2-Butène | 887 | 6,75 | 1847 | 1,45 | 3326 | 1,21 |
| Acroléine | 715 | 5,44 | 214 | 0,17 | 1633 | 0,59 |
| Methylcyclopentane | 75 | 0,57 | 348 | 0,27 | 1491 | 0,54 |
| Benzène | 694 | 5,28 | 583 | 0,46 | 1404 | 0,51 |
| Formaldéhyde | 92 | 0,70 | 530 | 0,42 | 1360 | 0,49 |
| Isobutane | 212 | 1,61 | 147 | 0,12 | 1337 | 0,48 |
| 2-Hexanone | 47 | 0,36 | 627 | 0,49 | 1209 | 0,44 |
| Iso hexane | 254 | 1,93 | 372 | 0,29 | 1204 | 0,44 |
| 3-Pentanone | 252 | 1,92 | 836 | 0,66 | 918 | 0,33 |
| 2,4-Diméthylpentene | 4 | 0,03 | 139 | 0,11 | 833 | 0,30 |
| Ethylcyclopropane | 394 | 3,00 | 662 | 0,52 | 791 | 0,29 |
| n-Hexane | 217 | 1,65 | 717 | 0,56 | 787 | 0,29 |
| 1,3-Pentadiène | 66 | 0,50 | 343 | 0,27 | 634 | 0,23 |
| Toluène | 14 | 0,11 | 88 | 0,07 | 315 | 0,11 |
| Méthyl Vinyle Cétone | 187 | 1,42 | 55 | 0,04 | 242 | 0,09 |
| Cyclopentène | 76 | 0,58 | 153 | 0,12 | 240 | 0,09 |
| 1,4-Cyclohexadiène | 23 | 0,18 | 59 | 0,05 | 236 | 0,09 |
| Acétone | 331 | 2,52 | 190 | 0,15 | 188 | 0,07 |
| Isobutène | 51 | 0,39 | 141 | 0,11 | 171 | 0,06 |
| Butanal | 295 | 2,25 | 112 | 0,09 | 144 | 0,05 |
| 2,4-Hexadiène | 30 | 0,23 | 126 | 0,10 | 133 | 0,05 |
| 1,3-Cyclohexadiène | 12 | 0,09 | 66 | 0,05 | 116 | 0,04 |
| Pentanal | 660 | 5,03 | 182 | 0,14 | 92 | 0,03 |
| 2-Pentanone | 121 | 0,92 | 122 | 0,10 | 75 | 0,03 |
| Cyclohexane | 5 | 0,04 | 41 | 0,03 | 44 | 0,02 |
| Methacroléine | 51 | 0,39 | 48 | 0,04 | 43 | 0,02 |
| Hexanal | 109 | 0,83 | 117 | 0,09 | 39 | 0,01 |
| THF | 40 | 0,30 | 20 | 0,02 | 19 | 0,01 |
| Isomères alcanes/acènes C7 | 676 | 5,15 | 4141 | 3,26 | 3185 | 1,16 |
| Isomères alcanes/acènes C8 | 223 | 1,70 | 2511 | 1,98 | 3086 | 1,12 |
| Isomères alcanes/alcènes ≥ C9 | 43 | 0,33 | 1824 | 1,44 | 6569 | 2,38 |
| TOTAL | 13132 | 100 | 126969 | 100 | 275701 | 100 |

Les résultats du tableau 2 montrent que les hydrocarbures volatils majoritaires produits sont le pentane, le propène, l'éthane et l'éthylène à partir d'un catalyseur contenant uniquement un sel de chlorure (le chlorure de sodium dans le cas présent), un sel ayant une température de fusion inférieure à celle du chlorure et moins de 5% d'oxyde(s) et de carbonate(s).

Le tableau 3 regroupe la somme de certains hydrocarbures obtenus.

**Tableau 3**

| Liste des hydrocarbures | Alpha 1 | | Alpha 2 | | Alpha 3 | |
|---|---|---|---|---|---|---|
| | mg/(n)m³ | % en masse | mg/(n)m³ | % en masse | mg/(n)m³ | % en masse |
| Isomères alcanes/alcènes ≥ C7 | 942 | 7,17 | 8476 | 6,68 | 12840 | 4,66 |
| Ethylène, propylène et butènes | 4112 | 31,31 | 65183 | 51,34 | 111745 | 40,53 |

Au vu du tableau 3, on constate que les hydrocarbures comprenant 7 et plus d'atomes de carbone ne représentent respectivement que 7,17%, 6,68% et 4,66% en masse des hydrocarbures présents dans les échantillons Alpha 1, Alpha 2 et Alpha 3.

Les hydrocarbures insaturés linéaires à 2, 3 et 4 atomes de carbone représentent respectivement 31,31%, 51,34% et 40,53% en masse des hydrocarbures présents.

La présence d'oxygène a permis la production d'aldéhyde et de cétones. Ces composés oxygénés peuvent être décomposés majoritairement en hydrocarbures et monoxyde de carbone lors du passage dans le second bain, notamment par bullage et donc en l'absence d'oxygène.

## Revendications

1. Procédé de gazéification d'une matière carbonée solide par catalyse en sels fondus selon lequel :
- on met en contact pendant une durée déterminée ladite matière carbonée avec un premier bain de sels fondus, ledit premier bain de sels fondus comprenant au moins un sel de type chlorure choisi parmi NaCl, MgCl₂, CaCl₂, KCl, FeCl₂ et présentant une température de fusion supérieure ou égale à 300°C, une densité supérieure à 1 mesurée à l'état liquide et à pression atmosphérique et une capacité thermique massique mesurée à l'état liquide et à pression atmosphérique inférieure à la capacité thermique massique de l'eau mesurée à une température de 25°C et à pression atmosphérique, ledit contact est réalisé en présence d'air,
- on récupère les gaz formés ;
**caractérisé en ce que** lesdits gaz récupérés sont mis en contact avec un second bain de sels fondus éventuellement différent dudit premier bain et **en ce que**, en sortie dudit second bain, les gaz sont soit stockés éventuellement sous pression, soit réinjectés dans ledit premier bain ou ledit second bain.

2. Procédé selon la revendication 1, **caractérisé en ce que** l'on met en contact lesdits gaz avec ledit second bain en faisant buller les gaz dans ledit second bain.

3. Procédé selon la revendication 2, **caractérisé en ce que** lesdits gaz sont injectés depuis le fond de la cuve contenant le second bain.

4. Procédé selon la revendication 1, **caractérisé en ce que** ledit premier bain contient en outre, au moins un hydroxyde choisi parmi LiOH, NaOH, KOH, Ca(OH)₂, Fe(OH)₂ et/ou au moins un oxyde choisi parmi K₂O, Na₂O, CaO, P₂O₅ et/ou au moins un carbonate choisi parmi Li₂CO₃, Na₂CO₃, K₂CO₃, CaCO₃ et/ou au moins un composé nitreux choisi parmi NaNO₂ et NaNO₃.

5. Procédé selon l'une quelconque des revendications précédentes, **caractérisé en ce que** ledit premier bain contient au moins un carbonate et **en ce que** la teneur massique en carbonate(s) est inférieure à 10%.

6. Procédé selon l'une quelconque des revendications précédentes, **caractérisé en ce que** ledit premier bain contient au moins un sel dont la température de fusion est inférieure à la température de fusion dudit chlorure ou à la température de fusion la plus basse desdits chlorures.

7. Procédé selon l'une quelconque des revendications précédentes, **caractérisé en ce que** ledit second bain :
- présente une température de fusion supérieure à 300°C ; et/ou
- comprend au moins un chlorure différent du chlorure de sodium ; et/ou
- contient au moins un iodure et/ou un fluorure ; et/ou
- comprend plus de 10% en masse d'au moins un carbonate.

8. Procédé selon l'une quelconque des revendication précédentes, **caractérisé en ce que** le contact entre ledit premier bain et ladite matière carbonée est mis en œuvre dans une enceinte contenant de l'air et rendue hermétique après introduction de ladite matière carbonée dans ladite enceinte.

9. Procédé selon la revendication 8, **caractérisé en ce que** ladite enceinte hermétique contient un mélange gazeux contenant moins de 20% en volume d'oxygène gazeux.

10. Procédé selon l'une quelconque des revendications précédentes, **caractérisé en ce que** ladite matière carbonée solide est choisie parmi :
- les déchets solides contenant ou constitués de matière(s) plastique(s) choisie parmi l'ABS, les acétates de cellulose (CA), les polyamides, le poly(téréphtalate de butylène) (PBT), les polycarbonates, les polyéthylènes, le PET, le PEHD, le PP, le PVC, PTFE, PEBD, le PMMA, les poly formaldéhydes (POM), les PVAC, les copolymères styrène-acrylonitrile, le polystyrène éventuellement expansé, , le PEEK, les résines thermo durcies, en particulier les silicones et les mélanges d'au moins deux de ces matières plastiques ;
- les déchets contenant ou constitués de matière organique animale et/ou végétale, éventuellement transformée, en particulier du papier, du carton, du bois, des déchets végétaux ; et - les mélanges de ces deux sortes de déchets ; et
- les déchets précités, éventuellement en mélange et contenus dans des sacs en matière plastique choisie parmi l'ABS, les acétates de cellulose (CA), les polyamides, le poly(téréphtalate de butylène) (PBT), les polycarbonates, les polyéthylènes, le PET, le PEHD, le PP, le PVC, PTFE, PEBD, le PMMA, les poly formaldéhydes (POM), les PVAC, les copolymères styrène-acrylonitrile, le polystyrène éventuellement expansé, le PEEK, les résines thermo durcies, en particulier les silicones et les mélanges d'au moins deux de ces matières plastiques.

11. Procédé selon l'une quelconque des revendications précédentes, **caractérisé en ce que** ledit contact avec ledit second bain est mis en œuvre dans une enceinte fermée contenant un mélange gazeux contenant 20% ou moins d'oxygène ledit mélange gazeux pouvant être à une pression inférieure à la pression atmosphérique.

12. Procédé selon l'une quelconque des revendications précédentes, **caractérisé en ce que** lesdits gaz issus du premier bain contenant de la vapeur d'eau, on condense ladite vapeur d'eau avant leur introduction dans le second bain.

13. Installation permettant la mise en œuvre du procédé selon l'une quelconque des revendications précédentes, **caractérisé en ce qu'**elle comprend :
- une enceinte (1) contenant un premier mélange de sels éventuellement à l'état fondu , ledit premier mélange de sels comprenant au moins un sel de type chlorure choisi parmi NaCl, MgCl₂, CaCl₂, KCl, FeCl₂ présentant une température de fusion supérieure ou égale à 300°C, une densité supérieure à 1 à l'état liquide et à pression atmosphérique et une capacité thermique massique à l'état liquide et à pression atmosphérique inférieure à la capacité thermique massique de l'eau mesurée à une température de 25°C et à pression atmosphérique ;
- des moyens de chauffage dudit premier mélange de sels permettant la fusion de ce dernier ;
- au moins un convoyeur (5) de matière carbonée, lequel comprend une entrée (51) par laquelle ladite matière carbonée est introduite et une sortie disposée de manière à ce que ladite matière tombe dans ledit premier bain ;
- des moyens de récupération des gaz qui sont connectés à ladite enceinte et qui débouchent au-dessus dudit premier bain ; et
- un second réacteur (2) qui comprend une entrée connectée auxdits moyens de récupération des gaz et apte à contenir un second mélange de sels fondus ;
- des moyens de chauffage aptes à faire fondre ledit second mélange de sels,
ledit second réacteur comportant éventuellement au moins un tamis (220) permettant de former des bulles de gaz de taille donnée et comportant une première conduite qui relie la sortie dudit second réacteur (2) à un réservoir de stockage (6) et éventuellement une seconde conduite qui relie la sortie dudit second réacteur (2) avec une zone de ladite enceinte (1) située sous la surface dudit premier bain de sels fondus ou à l'entrée dudit second réacteur (2).

14. Installation selon la revendication 13, **caractérisée en ce que** ledit second réacteur comporte :
- une cuve contenant ledit second mélange de sels fondus et **en ce que** ladite entrée dudit second réacteur est disposée en dessous du niveau de la surface libre dudit second mélange de sels fondus ; et/ou
des moyens permettant de le rendre étanche aux gaz et **en ce que** ladite installation comprend des moyens formant pompe permettant de réduire la pression du mélange gazeux contenu dans ledit second réacteur (2) avant la mise au contact dudit second mélange de sels fondus avec les gaz récupérés.

15. Installation selon l'une quelconque des revendications 13 et 14, **caractérisée en ce qu'**elle comporte :
- des moyens de condensation de la vapeur d'eau, lesdits moyens de condensation étant disposés en amont dudit réservoir de stockage (6) et/ou sur ladite seconde conduite et amont de ladite première enceinte et/ou dudit second réacteur (2) ; et/ou
- des moyens d'isolation/fermeture de ladite enceinte et/ou dudit second réacteur par rapport au milieu extérieur.

## Patentansprüche

1. Verfahren zum Vergasen eines festen kohlenstoffhaltigen Materials durch Katalyse in geschmolzenen Salzen, wobei:
- das kohlenstoffhaltige Material während einer bestimmten Dauer mit einem ersten Bad aus geschmolzenen Salzen in Kontakt gebracht wird, wobei das erste Bad aus geschmolzenen Salzen mindestens ein Salz vom Chloridtyp umfasst, ausgewählt aus NaCl, MgCl₂, CaCl₂, KCl, FeCl₂, und das eine Schmelztemperatur von größer oder gleich 300 °C, eine Dichte, im flüssigen Zustand und bei Atmosphärendruck gemessen, von größer als 1, und eine spezifische Wärmekapazität, im flüssigen Zustand und bei Atmosphärendruck gemessen, aufweist, die kleiner ist als die spezifische Wärmekapazität von Wasser, bei einer Temperatur von 25 °C und bei Atmosphärendruck gemessen, wobei der Kontakt in Gegenwart von Luft ausgeführt wird,
- die gebildeten Gase gewonnen werden;
**dadurch gekennzeichnet, dass** die gewonnenen Gase mit einem zweiten Bad aus geschmolzenen Salzen, das sich gegebenenfalls vom ersten Bad unterscheidet, in Kontakt gebracht werden, und dadurch, dass die Gase am Ausgang des zweiten Bades entweder, gegebenenfalls unter, Druck gespeichert oder in das erste Bad oder das zweite Bad zurückgeleitet werden.

2. Verfahren nach Anspruch 1, **dadurch gekennzeichnet, dass** die Gase mit dem zweiten Bad in Kontakt gebracht werden, indem die Gase in das zweite Bad eingesprudelt werden.

3. Verfahren nach Anspruch 2, **dadurch gekennzeichnet, dass** die Gase vom Boden des Behälters, der das zweite Bad enthält, her eingeleitet werden.

4. Verfahren nach Anspruch 1, **dadurch gekennzeichnet, dass** das erste Bad weiter mindestens ein Hydroxid, ausgewählt aus LiOH, NaOH, KOH, Ca(OH)₂, Fe(OH)₂, und/oder mindestens ein Oxid, ausgewählt aus K₂O, Na₂O, CaO, P₂O₅, und/oder mindestens ein Carbonat, ausgewählt aus Li₂CO₃, Na₂CO₃, K₂CO₃, CaCO₃, und/oder mindestens eine Nitroxoverbindung, ausgewählt aus NaNO₂ und NaNO₃, enthält.

5. Verfahren nach einem der vorstehenden Ansprüche, **dadurch gekennzeichnet, dass** das erste Bad mindestens ein Carbonat enthält, und dadurch, dass der Massengehalt an Carbonat(en) kleiner als 10 % ist.

6. Verfahren nach einem der vorstehenden Ansprüche, **dadurch gekennzeichnet, dass** das erste Bad mindestens ein Salz enthält, dessen Schmelztemperatur kleiner ist als die Schmelztemperatur des Chlorids oder die niedrigste Schmelztemperatur der Chloride.

7. Verfahren nach einem der vorstehenden Ansprüche, **dadurch gekennzeichnet, dass** das zweite Bad:
- eine Schmelztemperatur von größer als 300 °C aufweist; und/oder
- mindestens ein Chlorid umfasst, das sich von Natriumchlorid unterscheidet; und/oder
- mindestens ein Iodid und/oder Fluorid enthält; und/oder
- mehr als 10 Massen-% mindestens eines Carbonats umfasst.

8. Verfahren nach einem der vorstehenden Ansprüche, **dadurch gekennzeichnet, dass** der Kontakt zwischen dem ersten Bad und dem kohlenstoffhaltigen Material in einem Behälter erfolgt, der Luft enthält und nach Einbringen des kohlenstoffhaltigen Materials in den Behälter hermetisch abgedichtet wird.

9. Verfahren nach Anspruch 8, **dadurch gekennzeichnet, dass** das hermetisch dichte Gehäuse ein Gasgemisch enthält, das weniger als 20 Volumen-% gasförmigen Sauerstoff enthält.

10. Verfahren nach einem der vorstehenden Ansprüche, **dadurch gekennzeichnet, dass** das feste kohlenstoffhaltige Material ausgewählt ist aus:
- festen Abfällen, die Kunststoff(e) enthalten oder daraus bestehen, ausgewählt aus ABS, Celluloseacetaten (CA), Polyamiden, Poly(butylenterephthalat) (PBT), Polycarbonaten, Polyethylenen, PET, HDPE, PP, PVC, PTFE, LDPE, PMMA, Polyformaldehyden (POM), PVAC, Styrol-Acrylnitril-Copolymeren, gegebenenfalls expandiertem Polystyrol, PEEK, thermogehärteten Harzen, insbesondere Silikonen und Gemischen aus mindestens zwei dieser Kunststoffe;
- Abfällen, die tierisches und/oder pflanzliches organisches Material enthalten oder daraus bestehen, gegebenenfalls verarbeitet, insbesondere Papier, Pappe, Holz, pflanzliche Abfälle; und - Gemischen dieser zwei Abfallarten; und
- den oben genannten Abfällen, gegebenenfalls gemischt und in Säcken aus Kunststoff enthalten, ausgewählt aus ABS, Celluloseacetaten (CA), Polyamiden, Poly(butylenterephthalat) (PBT), Polycarbonaten, Polyethylenen, PET, HDPE, PP, PVC, PTFE, LDPE, PMMA, Polyformaldehyden (POM), PVAC, Styrol-Acrylnitril-Copolymeren, gegebenenfalls expandiertem Polystyrol, PEEK, thermogehärteten Harzen, insbesondere Silikonen und Gemischen aus mindestens zwei dieser Kunststoffe.

11. Verfahren nach einem der vorstehenden Ansprüche, **dadurch gekennzeichnet, dass** der Kontakt mit dem zweiten Bad in einem geschlossenen Behälter erfolgt, der ein Gasgemisch enthält, das 20 % oder weniger Sauerstoff enthält, wobei sich das Gasgemisch auf einem Druck kleiner als Atmosphärendruck befinden kann.

12. Verfahren nach einem der vorstehenden Ansprüche, **dadurch gekennzeichnet, dass**, wenn die aus dem ersten Bad stammenden Gase Wasserdampf enthalten, der Wasserdampf vor ihrer Einbringung in das zweite Bad kondensiert wird.

13. Anlage, die die Umsetzung des Verfahrens nach einem der vorstehenden Ansprüche ermöglicht, **dadurch gekennzeichnet, dass** sie umfasst:
- einen Behälter (1), der ein erstes Gemisch aus Salzen, gegebenenfalls im geschmolzenen Zustand, enthält, wobei das erste Salzgemisch mindestens ein Salz vom Chloridtyp umfasst, ausgewählt aus NaCl, MgCl₂, CaCl₂, KCl, FeCl₂, das eine Schmelztemperatur von größer oder gleich 300 °C, eine Dichte von größer als 1 im flüssigen Zustand und bei Atmosphärendruck, und eine spezifische Wärmekapazität im flüssigen Zustand und bei Atmosphärendruck aufweist, die kleiner ist als die spezifische Wärmekapazität von Wasser, bei einer Temperatur von 25 °C und bei Atmosphärendruck gemessen;
- Mittel zum Erhitzen des ersten Salzgemisches, die dessen Schmelzen ermöglichen;
- mindestens einen Förderer (5) für kohlenstoffhaltiges Material, der einen Eingang (51), durch den das kohlenstoffhaltige Material eingebracht wird, und einen Ausgang umfasst, der so angeordnet ist, dass das Material in das erste Bad fällt;
- Mittel zum Gewinnen der Gase, die mit dem Behälter verbunden sind und die oberhalb des ersten Bades münden; und
- einen zweiten Reaktor (2), der einen Eingang umfasst, der mit den Gasgewinnungsmitteln verbunden und geeignet ist, ein zweites Gemisch aus geschmolzenen Salzen zu enthalten;
- Heizmittel, die geeignet sind, das zweite Salzgemisch schmelzen zu lassen,
wobei der zweite Reaktor gegebenenfalls mindestens ein Sieb (220) umfasst, das es ermöglicht, Gasblasen einer gegebenen Größe zu bilden und eine erste Leitung, die den Ausgang des zweiten Reaktors (2) mit einem Speichertank (6) verbindet, und gegebenenfalls eine zweite Leitung umfasst, die den Ausgang des zweiten Reaktors (2) mit einem Bereich des Behälters (1) verbindet, der sich unterhalb der Oberfläche des ersten Bades aus geschmolzenen Salzen oder am Eingang des zweiten Reaktors (2) befindet.

14. Anlage nach Anspruch 13, **dadurch gekennzeichnet, dass** der zweite Reaktor umfasst:
- ein Becken, das das zweite Gemisch aus geschmolzenen Salzen enthält, und dadurch, dass der Eingang des zweiten Reaktors unterhalb der Ebene der freien Oberfläche des zweiten Gemisches aus geschmolzenen Salzen angeordnet ist; und/oder
Mittel, die es ermöglichen, ihn gasdicht zu machen, und dadurch, dass die Anlage Mittel umfasst, die eine Pumpe bilden, welche es ermöglicht, den Druck des in dem zweiten Reaktor (2) enthaltenen Gasgemisches zu reduzieren, bevor das zweite Gemisch aus geschmolzenen Salzen mit den gewonnenen Gasen in Kontakt gebracht wird.

15. Anlage nach einem der Ansprüche 13 und 14, **dadurch gekennzeichnet, dass** sie umfasst:
- Mittel zum Kondensieren des Wasserdampfs, wobei die Kondensationsmittel stromaufwärts des Speichertanks (6) und/oder an der zweiten Leitung und vor dem ersten Behälter und/oder dem zweiten Reaktor (2) angeordnet sind; und/oder
- Mittel zum Isolieren/Verschließen des Behälters und/oder des zweiten Reaktors in Bezug auf die Außenumgebung.

## Claims

1. A method for gasification of a solid carbon material by catalysis into molten salts according to which:
- said carbon material is brought into contact, for a determined time with a first bath of molten salts, said first bath of molten salts comprising at least one chloride-type salt selected from NaCl, MgCl₂, CaCl₂, KCl, FeCl₂ and having a melting temperature which is greater than or equal to 300°C, a density which is greater than 1 measured in the liquid state and at atmospheric pressure and a specific heat capacity measured in the liquid state and at atmospheric pressure which is lower than the specific heat capacity of water measured at a temperature of 25°C and at atmospheric pressure, said contact is made in the presence of air,
- the formed gases are recovered;
**characterised in that** said recovered gases are brought into contact with a second bath of molten salts optionally different from said first bath and **in that**, at the outlet of said second bath, the gases are either optionally stored under pressure or reinjected into said first bath or said second bath.

2. The method according to claim 1, **characterised in that** said gases are brought into contact with said second bath by bubbling the gases in said second bath.

3. The method according to claim 2, **characterised in that** said gases are injected from the bottom of the tank containing the second bath.

4. The method according to claim 1, **characterised in that** said first bath further contains at least one hydroxide selected from LiOH, NaOH, KOH, Ca(OH)₂, Fe(OH)₂ and/or at least one oxide selected from K₂O, Na₂O, CaO, P₂O₅ and/or at least one carbonate selected from Li₂CO₃, Na₂CO₃, K₂CO₃, CaCO₃ and/or at least one nitrous compound selected from NaNO₂ and NaNO₃.

5. The method according to any one of the preceding claims, **characterised in that** said first bath contains at least one carbonate and **in that** the mass content of carbonate(s) is less than 10%.

6. The method according to any one of the preceding claims, **characterised in that** said first bath contains at least one salt whose melting temperature is lower than the melting temperature of said chloride or the lowest melting temperature of said chlorides.

7. The method according to any one of the preceding claims, **characterised in that** said second bath:
- has a melting temperature which is greater than 300°C; and/or
- comprises at least one chloride different from sodium chloride; and/or
- contains at least one iodide and/or fluoride; and/or
- comprises more than 10% by mass of at least one carbonate.

8. The method according to any one of the preceding claims, **characterised in that** the contact between said first bath and said carbon material is implemented in an enclosure containing air and sealed after introduction of said carbon material into said enclosure.

9. The method according to claim 8, **characterised in that** said sealed enclosure contains a gaseous mixture containing less than 20% by volume of gaseous oxygen.

10. The method according to any one of the preceding claims, **characterised in that** said solid carbon material is selected from:
- solid waste containing or consisting of plastic material(s) chosen from ABS, cellulose acetates (CA), polyamides, poly(butylene terephthalate) (PBT), polycarbonates, polyethylenes, PET, HDPE, PP, PVC, PTFE, LDPE, PMMA, polyformaldehydes (POM), PVACs, styrene-acrylonitrile copolymers, optionally expanded polystyrene, PEEK, thermoset resins, in particular silicones and mixtures of at least two of these plastic materials;
- waste containing or consisting of organic animal and/or plant matter, possibly processed, in particular paper, cardboard, wood, plant waste; and - mixtures of these two types of waste; and
- the aforementioned waste, possibly mixed and contained in bags made of plastic material selected from ABS, cellulose acetates (CA), polyamides, poly(butylene terephthalate) (PBT), polycarbonates, polyethylenes, PET, HDPE, PP, PVC, PTFE, LDPE, PMMA, polyformaldehydes (POM), PVACs, styrene-acrylonitrile copolymers, optionally expanded polystyrene, PEEK, thermoset resins, in particular silicones and mixtures of at least two of these plastic materials.

11. The method according to any one of the preceding claims, **characterised in that** said contact with said second bath is implemented in a closed enclosure containing a gaseous mixture containing 20% or less oxygen said gaseous mixture may be at a pressure lower than atmospheric pressure.

12. The method according to any one of the preceding claims, **characterised in that** said gases from the first bath containing water vapour are condensed before they are introduced into the second bath.

13. An installation allowing the implementation of the method according to any one of the preceding claims, **characterised in that** it comprises:
- an enclosure (1) containing a first mixture of salts possibly in the molten state, said first mixture of salts comprising at least one chloride-type salt selected from NaCl, MgCl₂, CaCl₂, KCl, FeCl₂ having a melting temperature which is greater than or equal to 300°C, a density which is greater than 1 in the liquid state and at atmospheric pressure and a specific heat capacity in the liquid state and at atmospheric pressure which is lower than the specific heat capacity of water measured at a temperature of 25°C and at atmospheric pressure;
- means for heating said first mixture of salts allowing the latter to be melted;
- at least one carbon material conveyor (5), which comprises an inlet (51) through which said carbon material is introduced and an outlet disposed so that said material falls into said first bath;
- means for recovering gases which are connected to said enclosure and which open above said first bath; and
- a second reactor (2) which comprises an inlet connected to said gas recovery means and capable of containing a second mixture of molten salts;
- heating means capable of melting said second mixture of salts,
said second reactor optionally including at least one sieve (220) allowing forming gas bubbles of a given size and including a first conduit which connects the outlet of said second reactor (2) to a storage tank (6) and optionally a second pipe which connects the outlet of said second reactor (2) with an area of said enclosure (1) located under the surface of said first molten salt bath or to the inlet of said second reactor (2).

14. The installation according to claim 13, **characterised in that** said second reactor includes:
- a tank containing said second mixture of molten salts and **in that** said inlet of said second reactor is disposed below the level of the free surface of said second mixture of molten salts; and/or
means allowing making it gas-tight and **in that** said installation comprises means forming a pump allowing reducing the pressure of the gaseous mixture contained in said second reactor (2) before contact of said second mixture of molten salts with the recovered gases.

15. The installation according to any one of claims 13 and 14, **characterised in that** it includes:
- water vapour condensation means, said condensation means being disposed upstream of said storage tank (6) and/or on said second pipe and upstream of said first enclosure and/or said second reactor (2); and/or
- means for isolating/closing said enclosure and/or said second reactor relative to the external medium.
